**Europäisches Patentamt**

**European Patent Office**

**Office européen des brevets**

(11) Publication number : **0 505 325 A1**

# EUROPEAN PATENT APPLICATION

(21) Application number : **92830060.7**

(22) Date of filing : **11.02.92**

(51) Int. Cl.⁵ : **B60K 13/04,** B60K 5/12, F01N 7/18

Priority 150291 ITU TO91000041.

(30) Priority : **15.02.91**

(43) Date of publication of application : **23.09.92 Bulletin 92/39**

(84) Designated Contracting States : **DE ES FR GB IT NL SE**

(71) Applicant : **IVECO FIAT S.p.A. Via Puglia 35 I-10156 Torino (IT)**

(72) Inventor : **Riva, Vittorio Via Onorato Castellino 11 I-10141 Torino (IT)**

(74) Representative : **Notaro, Giancarlo et al c/o Jacobacci-Casetta & Perani S.p.A. Via Alfieri, 17 I-10121 Torino (IT)**

(54) **An exhaust-pipe mounting for commercial vehicles.**

(57)   A block of elastomeric material for supporting the exhaust pipe (T) of a commercial vehicle includes a loop of flexible metal braid (24) extending loosely around the block and partially co-moulded therewith. The flexible braid (24) is adapted to limit the resilient travel of the block.

FIG. 1

EP 0 505 325 A1

The present invention relates to a mounting for a suspended component of a motor vehicle, particularly for the exhaust system of a commercial vehicle, of the type including at least one suspension element of elastomeric material interposed between the structure of the motor vehicle and the suspended component and means for limiting the resilient extension of the suspension element.

A resilient mounting for engine blocks is described in French patent application FR 2,340,834. This device provides for the use of a metal cable incorporated in the block of elastomeric material to limit its resilient extension. This solution has the disadvantage of highly-concentrated tensile stresses between the metal cable and the rubber block which may cause the suspension element to split. Moreover, the limitation achieved by the cable takes effect suddenly when the block reaches its maximum extension, resulting in large stresses on the cable.

The object of the present invention is to provide a device of the type specified at the beginning of the description which does not have the aforesaid disadvantages and which is simple and cheap to produce.

According to the invention, this object is achieved by virtue of the fact that the means for limiting the resilient extension of the suspension element comprise a loop of flexible braid at least partially surrounding the suspension element.

The flexible braid preferably includes two diametrally-opposed first portions integral with the suspension element and two second portions which, in the rest configuration of the suspension element, are spaced from opposite sides thereof.

By virtue of these characteristics, the suspension element is in the form of a preassembled component, which facilitates its mounting on the vehicle. The particular braid-like form of the means for limiting the extension of the suspension element ensures low compression stresses between the braid and the elastomeric suspension element and prevents any danger of splitting of the element.

Moreover, the particular form of the suspension element and its braid loop enables the travel of the suspended component at its maximum extension to be "damped" particularly effectively.

Further advantages and characteristics of the device according to the invention will become clear from the detailed description which follows, given purely by way of non-limiting example, with reference to the appended drawings, in which:

Figure 1 is a perspective view of a motor-vehicle exhaust system with a mounting according to the invention,
Figure 2 is a front view of the mounting of Figure 1,
Figure 3 is a side view of the mounting of Figure 2, and
Figure 4 is a view similar to Figure 2, showing the mounting in a resiliently extended configuration.

With reference to the drawings, an exhaust pipe, indicated T, for a commercial vehicle includes a silencer S and mountings, generally indicated 10, for its suspension from the structure A of the motor vehicle.

Each mounting 10 includes two hook elements 12 fixed to the structure A of the vehicle and to the exhaust pipe T respectively and including L-shaped portions 12a defining two facing, parallel arms 14 on which a shaped suspension element 16 of elastomeric material is fitted.

The suspension element 16 is substantially cylindrical with flat ends 16a and a pair of opposite convex sides indicated 16b. As well as having longitudinal through-holes 18 for mounting it on the arms 14 of the hook elements 12, the element 16 also has an I-shaped, central longitudinal hole 20 for increasing its resilient travel.

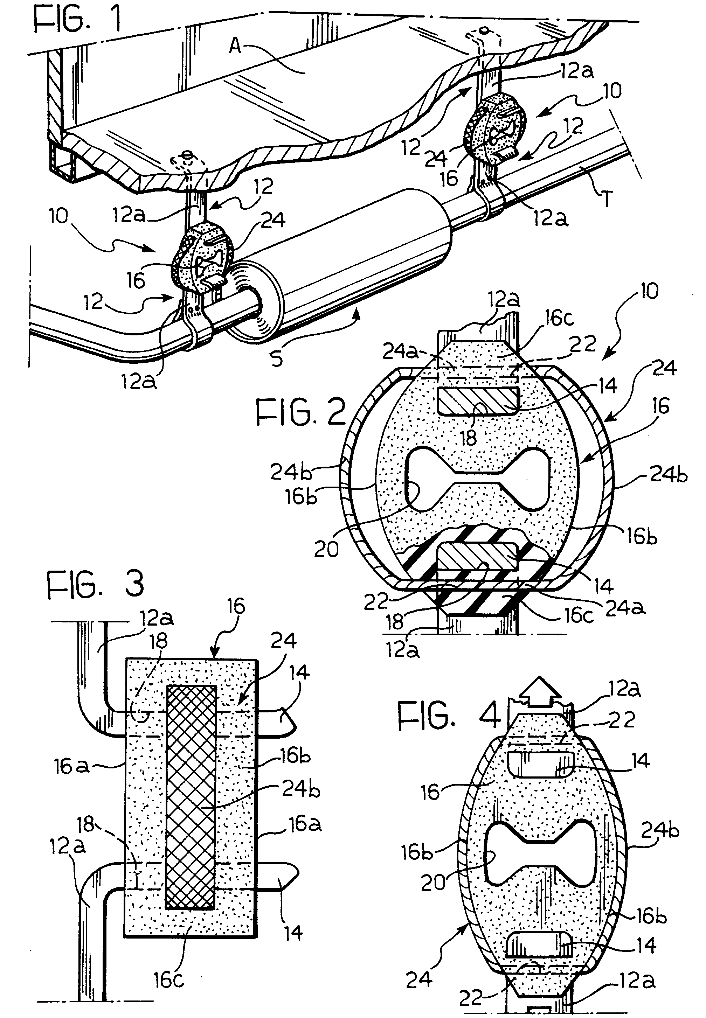

In its end portions 16c situated radially outwardly of the longitudinal holes 18, the suspension element 16 has parallel transverse holes 22 within which diametrally-opposed portions 24a of a loop 24 of metal braid narrower than the thickness of the suspension element 16 are vulcanised. In the rest configuration of Figures 2 and 3, the loop of braid 24 therefore has diametrally-opposite portions 24b which are spaced from the opposite convex side surfaces 16b of the elastomeric suspension element 16.

In the extended configuration of Figure 4 which corresponds, for example, to a vertical jolt of the exhaust pipe T or to the incorrect use of the pipe as a platform for inspecting the body of the vehicle, the element 16 extends to the configuration in which the portions 24b of the braid 24 are brought into contact with the convex sides 16b of the element 16. In the event of any further movement apart of the hook elements 12, the portions 24b of the braid 24 tend to compress the central portion of the element 16, effectively "damping" the reaching of the position of maximum extension in which the portions 24b of the braid 24 are disposed substantially parallel to each other.

It is clear from the foregoing that the combination of the braid 24 and the resilient element 16 integrated in a single body enables limited vertical travel of the braid whilst preventing the overloading of the rubber block. The solution according to the invention also enables lateral travel to be taken up.

## Claims

1. A mounting for a suspended component of a motor vehicle, particularly for its exhaust system, of the type including at least one suspension element of elastomeric material interposed between the structure of the motor vehicle and the suspended component and means for limiting the resilient extension of the suspension element, characterised in that the means comprise a loop of flexible braid (24) at least partially surrounding the suspension element (16).

2. A mounting according to Claim 1, characterised in that the flexible braid (24) includes two diametrally-opposed first portions (24a) integral with the suspension element (16) and two second portions (24b) which, in the unextended configuration of the suspension element (16), are spaced from opposite sides (16b) thereof.

3. A mounting according to Claim 1 or Claim 2, characterised in that the structure (A) of the motor vehicle and the suspended component (T, S) have L-shaped hook elements (12, 12a) with respective facing, parallel portions (14) on which the suspension element (16) is mounted, the braid loop (24) extending around the parallel portions (14) of the hook elements (12).

4. A mounting according to Claim 3, characterised in that the suspension element (16) is cylindrical and has two longitudinal through-holes (18) for mounting on the hook elements (12) and two transverse through-holes (22) which are situated radially outwardly of the longitudinal holes (18) and in which respective portions (24a) of the flexible braid (24) are vulcanised.

5. A mounting according to Claim 4, characterised in that the suspension element (16) has two opposite convex sides (16b) for cooperating resiliently with the flexible braid (24b, 24) in the configuration of minimum extension of the suspension element (16).

FIG. 1

FIG. 2

FIG. 3

FIG. 4

**European Patent Office**

# EUROPEAN SEARCH REPORT

Application Number

EP    92 83 0060

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 315 804 (WEGU) | 1 | B60K13/04 |
| A | * abstract; figures 1-2 * | 2-5 | B60K5/12 |
| | --- | | F01N7/18 |
| X | DE-A-1 919 944 (U.SCHNOCK) | 1 | |
| | * claim 1; figure 2 * | | |
| | --- | | |
| A | DE-A-1 505 498 (BMW A.G.) | 1,3-5 | |
| | * the whole document * | | |
| | --- | | |
| A | DE-B-1 034 419 (R.PIODI) | 2 | |
| | * the whole document * | | |
| | --- | | |
| A | EP-A-0 315 805 (WEGU) | 1 | |
| | * abstract; figure 1 * | | |
| | | | |
| | ----- | | |
| | | | TECHNICAL FIELDS SEARCHED (Int. Cl.5 ) |
| | | | B60K |
| | | | F16H |
| | | | F16F |
| | | | F16L |
| | | | F01N |

The present search report has been drawn up for all claims

| Place of search | Date of completion of the search | Examiner |
|---|---|---|
| THE HAGUE | 31 JULY 1992 | VINGERHOETS A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)